# EUROPEAN PATENT APPLICATION

(11) **EP 3 460 513 A1**
(43) Date of publication of application: **27.03.2019**
(21) Application number: 18192335.0
(22) Date of filing: 04.09.2018
(51) Int. Cl.: G01S 13/58, G01C 5/00, G01S 13/64, G01S 13/88, G01S 13/95

(54) **RADAR ALTIMETER SEA STATE ESTIMATION**

(30) Priority: 20.09.2017 US 201715709721
(71) Applicant: Honeywell International Inc., Morris Plains, NJ New Jersey 07950 (US)
(72) Inventor: FRICK, Seth T, Morris Plains, NJ New Jersey 07950 (US); BURLET, Todd R, Morris Plains, NJ New Jersey 07950 (US)
(74) Representative: Houghton, Mark Phillip

(57) **Abstract**

A method and apparatus for estimating the sea state beneath a platform using a radar altimeter is provided. The method includes dividing a received wide angle radar beam into a plurality of Doppler bins. Ranges to a sea surface is tracked for at least one Doppler bin over time. Wave spectrum information associated with the sea state is estimated based on at least one tracked range. The estimated wave spectrum information includes at least one of a primary peak period estimation and a significant wave height estimation.

## Description

### BACKGROUND

The estimation of the sea state is of great importance to certain civilian and military maritime operations. For example, helicopter-based search-and-rescue operations benefit from knowing the current local sea state prior to deploying a diver into the water to reduce the safety risk and increase the chance of mission success. In another example, one or more unmanned aerial vehicles (UAVs) may be deployed from a ship to traverse a certain unknown region, estimate the sea state in that region, and relay this information back to the host ship. This would allow the ship to not only estimate the sea state in its immediate vicinity based on onboard measurements, but also to estimate the sea state of surrounding areas in real time. Current techniques used to estimate local sea states are based on measurements of ship motion or data from instrumented buoys. However, in the examples scenarios provided above, it is unlikely that sea state information will be available using the current techniques.

### SUMMARY

The following summary is made by way of example and not by way of limitation. It is merely provided to aid the reader in understanding some of the aspects of the subject matter described. Embodiments provide an off-the-shelf solution in real time for the estimation of sea state by aerial platforms.

In one embodiment, a method for estimating the sea state beneath a platform using a radar altimeter is provided. The method includes dividing a received wide angle radar beam into a plurality of Doppler bins. Ranges to a sea surface is tracked for at least one Doppler bin over time. Wave spectrum information associated with the sea state is estimated based on at least one tracked range. The estimated wave spectrum information includes at least one of a primary peak period estimation and a significant wave height estimation.

In another example embodiment, another method of estimating the sea state beneath a platform using a radar altimeter is provided. The method includes filtering and gating at least one radar return signal to form a plurality of range bins. Fast Fourier Transforms (FFTs) are applied in each range bin across several pulse repetition intervals to separate out the at least one return radar signal into a plurality of Doppler bins. Range information in at least one Doppler bin over a period of time is determined. A primary peak period and a significant wave height based at least in part on the determined range information in the at least one Doppler bin over the period of time are estimated.

In yet another embodiment, a radar altimeter sea state estimation system is provided. The radar altimeter sea state estimation system includes a transmitter, a receiver, at least one antenna, filtering and gating circuit, a Fast Fourier Transform (FFT), at least one memory and a controller. The transmitter is configured to transmit at least one radar signal. The receiver is configured to receive a return of the at least one radar signal. The at least one antenna is in communication with at least one of the transmitter and the receiver. The filtering and gating circuit is coupled to receive the return of the at least one radar signal and form a plurality of range bins. The FFT configured to be applied across each range bin to produce a plurality of Doppler bins. The at least one memory is used to store the range bins and Doppler bins. The controller is in communication with the receiver, the filtering and gating circuit, the FFT, and the at least one memory. The controller is configured to determine range information in at least one Doppler bin over a period of time and estimate a primary peak period and a significant wave height based at least in part on the determined range information in the at least one Doppler bin over the period of time.

### BRIEF DESCRIPTION OF THE DRAWINGS

Embodiments can be more easily understood and further advantages and uses thereof will be more readily apparent, when considered in view of the detailed description and the following figures in which:
Figure 1 is an illustration of a stationary (or hovering) platform including a radar altimeter sea state estimation system according to one exemplary embodiment;
Figure 2 is a block diagram of a radar altimeter sea state estimation system according to one exemplary embodiment;
Figure 3 is a radar altimeter sea state estimation system flow diagram according to one exemplary embodiment;
Figure 4 is a radar altimeter sea state estimation system flow diagram according to another exemplary embodiment;
Figure 5A is an example of a sea state simulation according to one exemplary embodiment;
Figure 5B is an example simulation of return energy range profile received at a radar altimeter according to one exemplary embodiment;
Figure 5C is an example simulation of a Doppler Range profile according to one exemplary embodiment;
Figure 6A is a plot of outputs for a zero Doppler point over a time interval according to one exemplary embodiment; and
Figure 6B is a plot of an FFT taken of the range measurement over time of the zero Doppler bin.
In accordance with common practice, the various described features are not drawn to scale but are drawn to emphasize specific features relevant to the subject matter described. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the embodiments, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments provide an off-the-shelf solution in real time for the estimation of sea state by aerial platforms that include a radar altimeter. The sea state estimate may relate to an estimate of significant wave height (height between trough and peak of a certain percentage of waves) and a primary peak period (frequency of waves in a spatial domain

(time and distance between peaks)). In embodiments, a Doppler processing technique is implemented to determine sea state estimates. This technique allows a wide angle radar beam, which illuminates a large area of terrain or sea surface, to be sub-resolved into many smaller virtual beams (Doppler bins or Doppler beams) based on relative motion between the radar platform and the terrain or sea surface. The range to the terrain or sea surface may be computed independently in each of these "Doppler bins," providing additional information about the motion of the radar platform and/or the terrain or sea surface.

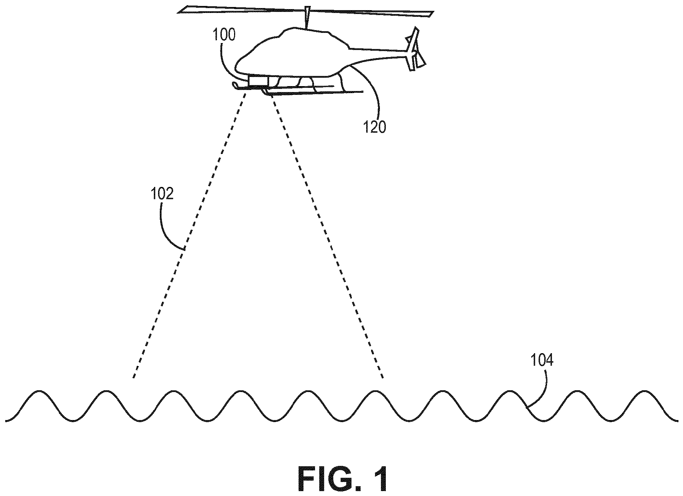

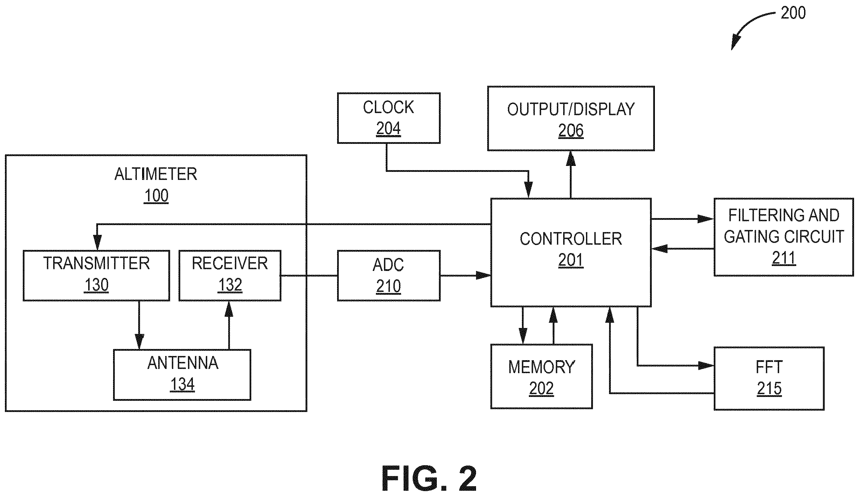

In the case of a hovering platform over a sea surface, the Doppler bins are formed based solely on the motion of the sea surface. By examining the changes in the ranges to the sea surface in each Doppler bin over time, parameters of the sea state such as significant wave height and primary peak period may be estimated as described herein. Referring to Figure 1, an illustration of a hovering platform 120 (such a helicopter) that includes a radar altimeter 100 that is used to implement a sea state estimate system of an example embodiment is shown. The radar altimeter 100 is illustrated as having a wide angle radar beam coverage area 102 over the sea surface 104. Figure 2 illustrates a radar altimeter sea state estimation system 200 of one exemplary embodiment. In this example embodiment, the radar altimeter sea state estimation system 200 includes altimeter 100. The altimeter 100 includes a transmitter 130 and a receiver 132. The transmitter 130 and receiver 132 are coupled to a single antenna 134 is this example embodiment. Hence, this embodiment illustrates a Single Antenna Radar Altimeter (SARA). However, in other embodiments the transmitter 130 and the receiver 132 may have separate antennas. The radar altimeter sea state estimation system 200 further includes a controller 201, memory 202, clock 204, analog-to-digital converter (ADC) 210, filtering and gating circuit 211 and an output/display 206 to convey estimated sea state information to a user. These components of the radar altimeter sea state estimation system 200 may all or at least in part be incorporated as part of the radar altimeter 100.

The controller 201 in this example embodiment, controls the operation of transmitter 130 and the processing of signals received by the receiver 134. The clock 204 is used by the controller 201 in timing the radar altimeter sea state estimation system 200 including the timing of the transmission of radar signals (pulses) via the transmitter 130 and sampling of returned signals in a pulsed radar embodiment, or in timing modulation periods in a Continuous Wave (CW) radar embodiment. The ADC 210 converts return analog signals captured by the receiver 132 into digital return signals that are processed by the controller 201. The memory 202 may store instructions carried out by the controller 200, return signal data and processed signal data. The filtering and gating circuit 211 is configured to form a series of range bins from the digital signals. The controller 201 stores data relating to the range bins in the memory 202. A Fast Fourier Transform (FFT) 215 is applied across each range bin over several pulse repetition intervals (PRIs) or modulation periods depending on the embodiment, to produce a plurality of Doppler bins in each range bin (i.e. a range-Doppler array).

In general, the controller 201 (processor) may include any one or more of a microprocessor, a digital signal processor (DSP), an application specific integrated circuit (ASIC), a field program gate array (FPGA), or equivalent discrete or integrated logic circuitry. In some example embodiments, controller 201 may include multiple components, such as any combination of one or more microprocessors, one or more controllers, one or more DSPs, one or more ASICs, one or more FPGAs, as well as other discrete or integrated logic circuitry. The functions attributed to controller 201 herein may be embodied as software, firmware, hardware or any combination thereof. As discussed above the memory 202 may include computer-readable instructions that, when executed by controller 201 provide functions of the radar altimeter sea state estimation system 200. The computer readable instructions may be encoded within the memory 202. Memory 202 may comprise computer readable storage media including any volatile, nonvolatile, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

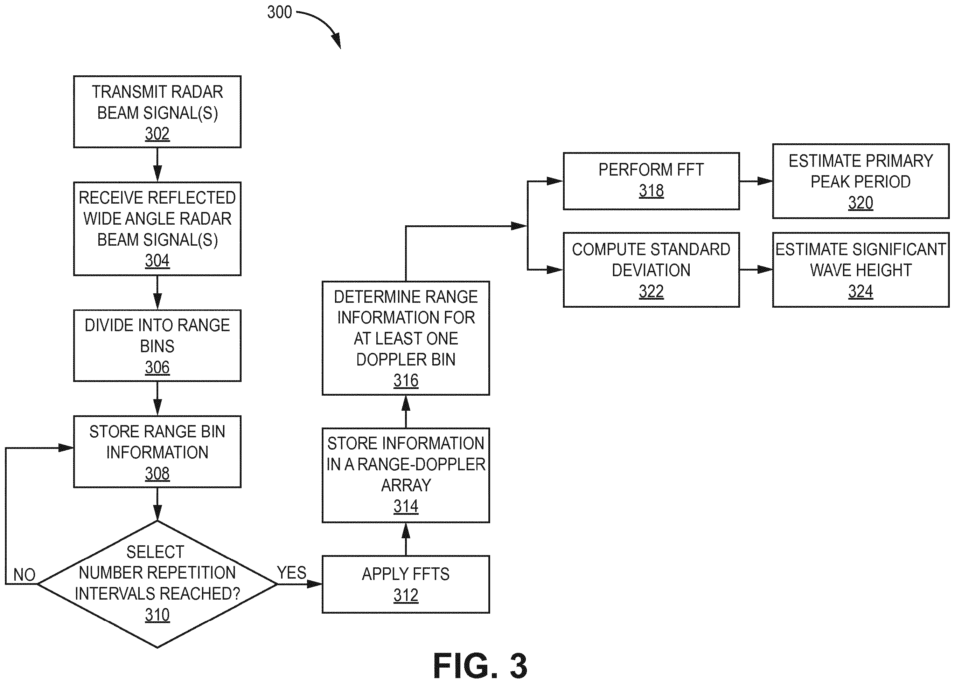

A radar altimeter sea state estimation system flow diagram 300 that may be executed at least in part by the controller 201 of one exemplary embodiment is illustrated in Figure 3. The flow diagram is illustrated in a series of steps or blocks. The order in which the blocks occur are not limited to the order they are presented in Figure 3. Hence, in other embodiments, the blocks may occur in a different order. In this exemplary embodiment, block (302) sets out the transmitter 130 transmits signal(s) of a wide angle radar beam at a given frequency. In one embodiment, the transmitted signals are pulsed radar signals while in another embodiment the signal is a modulated CW radar signal. Wide angle return signal(s) are received at receiver 132 at block (304). The return wide angle signal(s) are divided up into a plurality of range bins at block (306). In one embodiment this is done by converting the return analog signal(s) into digital return signal(s) and then applying matched filtering and gating from the matched filtering and gating circuit 211. Data relating to each range bin is stored in the memory 202 at block (308) over a select repetition interval. In a pulsed radar signals embodiment, the select repetition interval is a select pulse repletion interval (PRI) and in a CW radar embodiment it is a select modulation period interval. If a select number of repetition intervals have not been reached at block (310) the process continues at block (308) storing range bin information.

Once the select number of repetition intervals have been reached at block (310), Fast Fourier Transforms (FFTs) are applied in each range bin over the select repetition interval to separate out the return signal(s) into a plurality of Doppler bins within each range bin at block (312). Range-Doppler information obtained by the FFTs are then stored in a range-Doppler array in memory 202 at Block (314). Range information in at least one Doppler bin over a period of time is determined at block (316) from the stored range-Doppler information in the range-Doppler array. In one embodiment the closest range within each Doppler bin is determined at Block (316) by taking the range-Doppler array and forming a range Doppler vector, for example based on a return signal energy threshold. The threshold may be fixed or dynamically determined based on the measured noise floor, e.g. using constant false alarm rate (CFAR) detection techniques. From the range-Doppler information the wave spectrum information (i.e. the sea state) may be estimated including the primary peak period and the significant wave height. For example, at block (318), an FFT is performed on collected range-Doppler vectors to estimate the primary peak period at block (320) and at block (322) a standard deviation of the collected range-Doppler vectors is computed to estimate the significant wave height at block (324).

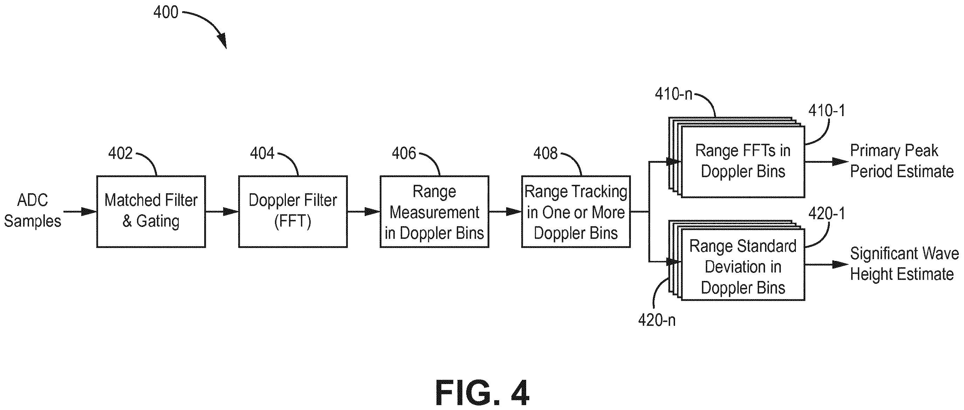

Another example of processing steps of an embodiment are shown in the process flow diagram of Figure 4. Here again, the process flow diagram 400 is illustrated as a series of steps or blocks. The order in which the blocks occur are not limited to the order they are presented in Figure 4. Hence, in other embodiments, the blocks may occur in a different order. Figure 4 illustrates that block (402) receives return wide angle radar signal(s) that has been converted into digital samples by ADC 210.

The digital return samples are applied to matched filter and gating at block (402) to form a plurality of range bins. The gates are used to select a prescribed time period for a group of measurements of reflected energy. Each gate is considered represents a window of time in which the system 200 monitors the reflect energy (that is, the radar altimeter 100 begins to coherently integrate the signal at the beginning of each gate and stops coherently integrating this signal at the end of each gate). The width of the gate (that is the width of time), is typically set to be equal to the transmit pulse width, but can be longer or shorter.

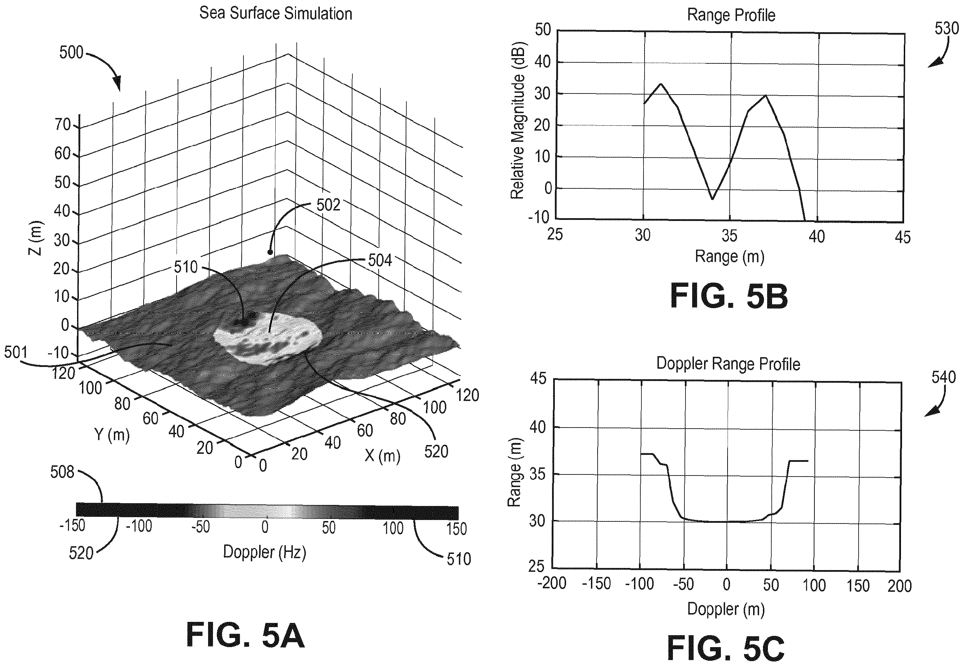

At block (404) FFTs are used to separate the return signal into one or more Doppler bins. In an embodiment utilizing either a frequency-modulated continuous wave (FMCW) or linear FM pulse compression altimeter system, FFT processing in each frame (or modulation period) is further used to produce a FFT that corresponds to a range profile of a signal return energy vs range. An example of a simulated range profile is illustrated in Figure 5B discussed in detail below. In an embodiment, the process takes each of the range bins and looks at the change in the RF energy measured over several frames (several modulations). In an embodiment, this is accomplished by performing FFTs in each range bin across a time interval of a range-time array. This produces a range vs Doppler image or range-Doppler array. The range-Doppler array is an image wherein the value of each pixel corresponds to the received RF energy (i.e. high energy where targets are present and low energy where no targets are present). The location of each pixel corresponds to a specific value of range and Doppler. From the range-Doppler array, the nearest range within each Doppler bin is determined at block (406) to form a Doppler-Range profile. An example of a simulated Doppler-Range profile is illustrated Figure 5C discussed in detail below. In an embodiment, the nearest range (closest range that has sufficient RF energy to represent a detectable target) within each Doppler bin is used to generate a range-Doppler vector.

The range values in one or more Doppler bins of the range-Doppler vector are tracked and stored over several coherent processing intervals (CPIs) at block (408). In one embodiment, a range is only tracked in a zero hertz Doppler bin. A zero hertz Doppler bin represents a portion of the of the sea surface that contributes zero variation in RF frequency due to the Doppler effect. This is at a point where the velocity of the sea surface relative to the altimeter is perpendicular to the line-of-sight between the altimeter and the sea surface. This example embodiment keeps the analysis simple because a zero hertz Doppler bin is expected to be the most useful and most accurate. Wave spectrum information estimations associated with the sea state based on the tracked ranges in the zero Doppler bin can be determined. For example, by performing a FFT at box (410-1) on the range values over several coherent processing intervals in the zero hertz Doppler bin, a primary peak period estimate can be determined from the peak frequency component observed in the FFT. Moreover, by applying a range standard deviation in the zero hertz Doppler bin at block (420-1) a significant wave height estimate can be determined.

Because the Doppler-range profile is formed across all the Doppler bins that can be measured, a sea state estimation algorithm may be performed across multiple Doppler bins (instead of just the zero hertz Doppler bin) in parallel which may improve the estimations. In this embodiment, FFTs of the range values over several coherent processing intervals in the tracked Doppler bins at blocks (410-1 through 410-n) are processed to determine the primary peak period estimate and the range standard deviation is taken across the multiple Doppler bins at blocks (420-1 through 420-n) over several coherent processing intervals to determine the significant wave height estimate. Significant wave height may be defined, for example in an embodiment, as four times the standard deviation of the sea surface elevation. Other definitions of the significant wave height can be used.

Referring to Figure 5A, a result of a sea state simulation 500 of an example is illustrated. Sea state simulation 500 shows a simulated sea surface 501 with an aerial radar platform 502 hovering approximately 30 meters above. The simulation was created using a Matlab toolbox described in Brodtkorb, P.A., Johannesson, P., Lindgren, G., Rychlik, I., RydÃ©n, J. and SjÃ¶, E. (2000). "WAFO - a Matlab toolbox for analysis of random waves and loads", Proc. 10th Int. Offshore and Polar Eng. Conf., Seattle, USA, Vol III, pp. 343-350. The different shades on the sea surface in an illumination area 504 (beam illumination pattern 504) represents Doppler information within the portion of the sea surface illuminated by an antenna beam from the aerial radar platform. The sea surface is simulated in this example with a significant wave height of 8 meters and a primary peak period of 7 seconds. Shade bar map 508 indicates Doppler (Hz). For example, shade 520 may indicate areas in the simulation 500 of negative Doppler frequency where the water is receding from the altimeter and shade 510 may indicate areas in the simulation 500 of positive Doppler frequency where the water is moving towards the altimeter. Figure 5B illustrates an example simulation of return energy range profile 530 received at a radar altimeter. The signal magnitudes portrayed in this range profile are based on an arbitrary scaling in decibels and does not represent any particular absolute signal power at any point in the radar altimeter (e.g. in watts or dBm). This approach still allows for signal return magnitudes in the range profile to be compared to one another in a relative sense. The relative magnitude scaling accounts for several factors including free-space path loss of the RF signals (which varies with range), antenna gain (which varies with the angle of RF signals at the antenna), and the backscatter reflectivity of the sea surface (which varies with the angle of incidence of the RF signals at the sea surface). As illustrated, the highest return which is approximately 32 dB in this simulation occurs at about 31 meter range.

Figure 5C illustrates an example simulation of a Doppler-range profile 540. In this simulation all the different range bins are measured at a fairly fast rate. For example, in a Single Antenna Radar Altimeter (SARA) embodiment, a measurement of the energy in every range bin approximately once every millisecond (i.e. a rate of 1 kilohertz) may be taken. FFTs are taken in each range bin across several one-millisecond frames to measure the Doppler frequency in each range bin to form a range-Doppler image (range-Doppler array). The image is reviewed to attempt to find a leading edge in every Doppler bin based on a thresholding or edge detection technique. The leading edge is the closest range of a detectable target. This Doppler processing technique is called Doppler beam sharpening. It allows for separate measurements of range to different portions of the beam illumination pattern 504 that have a very similar Doppler. An Example of Doppler beam sharpening is found in U.S. Patent No. 7,911,375, entitled "Doppler Beam-Sharpened Radar Altimeter" filed on June 3, 2009 which is incorporated in its entirety by reference.

Normally, Doppler beam sharping is used in an aircraft flying over a fixed terrain surface. Over a fixed surface, the Doppler beams get formed in a predictable manner. Based on Doppler, it can be determined which range measurements correspond to which sub-resolved portions of the antenna beam. Because a sea surface is moving in a generally unpredictable way, in each Doppler bin there will be contributions from many different parts of the illuminated pattern on the sea surface. That is, in a sea state estimation scenario, the Doppler information does not map directly to angular measurements or cross-range locations in predictable way since the Doppler arises from the motion of the sea surface. Embodiments however are able to extract some useful information from Doppler in a sea surface scenario. The Doppler measured has components due to both the vertical motion and horizontal motion of the sea surface plus the angle at which the sea surface is observed. At steeper angles near the edges of the beam, the horizontal velocity of the sea surface produces a larger radial velocity component. By only considering the closest range within each Doppler bin, the focus is primarily on the center of the beam where most of the Doppler measured is due to the vertical motion of the sea surface. Moreover, with the measure of the vertical height estimates of the significant wave height and primary peak period can be made as discussed below. As discussed above, if only the closest range measurements are considered in each of the Doppler bins (or in just the zero hertz Doppler bin in an embodiment) and form a Doppler Range profile it may look like a parabola shown in Figure 5C; that is, the closest range to the sea surface measured anywhere in the antenna beam may be at or near zero Doppler, with more distant ranges corresponding to large Doppler frequencies.

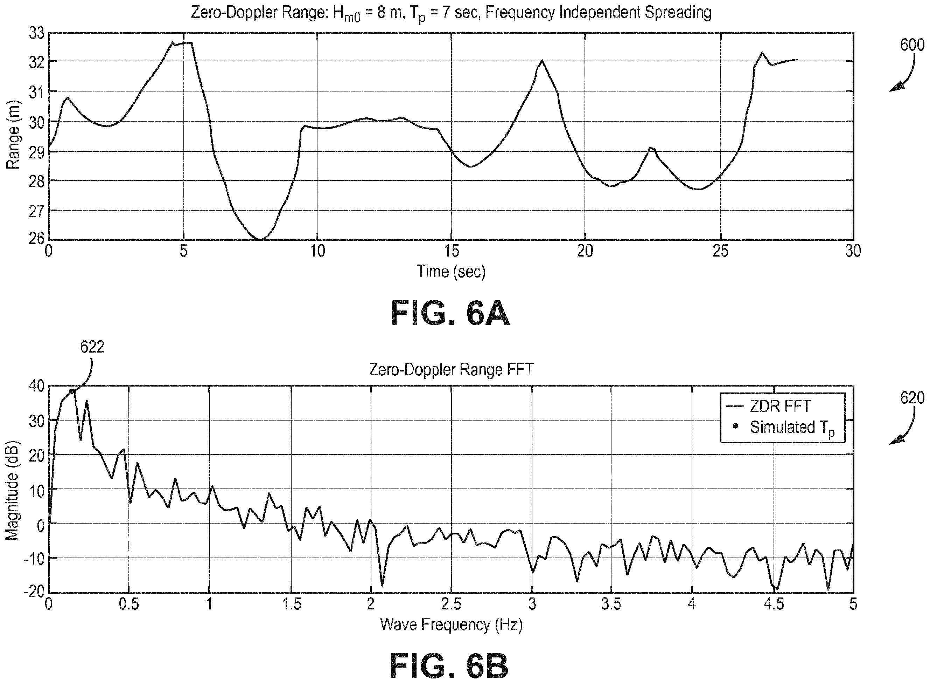

The process to estimate the sea state information based on this information is discussed in view of Figures 6A and 6B. As discussed above, one or more of these Doppler bins may be analyzed to see how the range changes. Hence, some of the parameters of the sea surface can be estimated without having to take into account the entire beam illumination pattern 504 of the sea surface. Hence, in an embodiment, only a finer point of the sea surface can be focused on. In this example, how a range for a select point with a same Doppler frequency changes over time is reviewed. Particularly if the point chosen to review is at or near the zero Doppler point, a fairly accurate estimate of the sea state can be determined. A portion of the of the sea surface which contributes energy to the zero Doppler point are parts of the sea surface where the velocity of the sea surface relative to the altimeter is perpendicular to the line-of-sight between the altimeter and the sea surface. These points contribute no radial component of velocity and are the most useful in determining sea state. Freeze frame outputs of plot 600 for a zero Doppler point over a 30 second time interval are shown in Figure 6A. As illustrated the freeze frame outputs of plot 600 have some periodic characteristics. Range standard deviation statistics may be used on the freeze frame output to determine the significant wave height.

Plot 620 of Figure 6B illustrates the taking of an FFT of the range measurement in the zero Doppler bin over a time interval consisting of many CPIs. The peak in this FFT helps estimate the primary peak period. A peak dot 622 illustrated in plot 620 is a frequency associated with the primary peak period specified as a simulation input. One method to estimate the peak period is to use an algorithm that looks at the peaks of the FFT which in plot 620 are actually close to one another. The full FFT may further provide wave spectrum information beyond just the primary peak period. In embodiments, periodically updating the estimate over a much larger time period may result in a more accurate result. Moreover, as discussed above, the use of more Doppler bins than just the zero Doppler bins may be used to achieve a more accurate result.

The flow diagrams 300 and 400 in Figures 3 and 4 are just two potential methods of providing wave spectrum and wave height estimates using a stationary platform. This same method may be applied in the case of a platform which is flying over the sea surface as well, provided some information about the platform dynamics are known. The speed of the platform may be estimated by the radar altimeter itself using similar processing techniques to those described above and techniques disclosure in U.S. Patent Application No. 14/613,879, entitled Systems and Methods for Measuring Velocity with a Radar Altimeter, filed on the February 4, 2015 which is herein incorporated in its entirety by reference and referred to herein as the '879 application.

A method for measuring velocity magnitude of a platform in relation to a surface provided in'879 application includes transmitting a radar beam that is aimed toward a surface. A plurality of reflected signals are received in response to the transmitted radar beam. The plurality of reflected signals correspond to portions of the transmitted radar beam that are reflected by a plurality of portions of the surface. Doppler filtering is applied to the plurality of signals to form at least one Doppler beam. Range measurements are identified within each Doppler beam in the at least one Doppler beam. The velocity magnitude is calculated based on the range measurements of the at least one Doppler beam. The calculated velocity magnitude in an embodiment is determined by identifying a set of test velocities. For each velocity in the set of test velocities, a magnitude of errors is calculated based on the range measurements associated with the at least one Doppler beam. A velocity is identified within a range of test velocities associated with the smallest magnitude of errors as the velocity magnitude. In another example embodiment, the velocity magnitude is determined by computing the velocity based on range measurements gathered over a time period where the velocity does not change significantly. Further in embodiments disclosed in the '879 application the calculating of the velocity magnitude includes acquiring an initial velocity estimate that is based on the maximum observed Doppler shift that is above a noise floor.

Moreover, in another embodiment to measure the velocity using a radar altimeter in the ' 879 application, the radar altimeter creates two or more Doppler beams at different Doppler frequencies. The radar altimeter then may apply a tracking algorithm to each of the beams to produce at least two independent altitude tracks. The range measurements produced by the different altitude tracks will be offset from one another and the magnitude of the range will be dependent on the velocity of the aircraft in relation to the measured terrain. Using trigonometric functions, the calculations based on the range differences between the different tracks are used to determine the velocity of the aircraft in relation to the ground.

### EXAMPLE EMBODIMENTS

Example 1 is a method of estimating the sea state beneath a platform using a radar altimeter, the method includes dividing a received wide angle radar beam into a plurality of Doppler bins. Ranges to a sea surface are tracked for at least one Doppler bin over time. Wave spectrum information associated with the sea state is estimated based on at least one tracked range. The estimated wave spectrum information includes at least one of a primary peak period estimation and a significant wave height estimation.
Example 2, includes the method of Example 1, wherein dividing the received wide angle radar beam into a plurality of Doppler bins further includes applying pulse Doppler processing techniques to samples provided by the radar altimeter.
Example 3 includes the method of any of the Examples 1-2, further including filtering and gating digital samples of the wide angle radar beam over pulse repetition intervals to produce a vector of range bins in each pulse repetition interval. The produced range bin vectors are stored over several pulse repetition intervals to form a range-time array. Fast Fourier Transforms are applied in each range bin across a time dimension of the rang-time array to produce Doppler bins in a range-Doppler array. The nearest range within each Doppler bin is determined to establish a range-Doppler vector. Range values from one or more Doppler bins from the range-Doppler vector are stored over several coherent processing intervals. A Fast Fourier Transform of the range values is performed over several coherent processing intervals in at least one tracked Doppler bin to estimate the wave spectrum information.
Example 4 includes the method of any of the Examples 1-3, wherein estimating the significant wave height further includes computing a standard deviation of the range values in at least one Doppler bin over several coherent processing intervals.
Example 5 includes the method of any of the Examples 1-4, wherein a significant wave height is four times the standard deviation of the sea surface elevation.
Example 6 includes the method of any of the Examples 1-5, wherein tracking ranges to a sea surface for at least one Doppler bin over time further includes tracking only the closest range to the sea surface in at least one Doppler bin.
Example 7 includes the method of Example 6, wherein tracking only the closest ranges to the sea surface for the at least one Doppler bin further includes tracking only the closest range to the sea surface in a zero-Doppler bin.
Example 8 includes the method of any of the Examples 1-7, further includes using a velocity of a platform with the radar altimeter when estimating the wave spectrum information.
Example 9 includes the method of Example 9, wherein the velocity of the platform is estimated using the radar altimeter.
Example 10 is another method of estimating the sea state beneath a platform using a radar altimeter. The method includes filtering and gating at least one radar return signal to form a plurality of range bins. Fast Fourier Transforms (FFTs) are applied in each range bin across several pulse repetition intervals to separate out the at least one return radar signal into a plurality of Doppler bins. Range information in at least one Doppler bin over a period of time is determined. A primary peak period and a significant wave height based at least in part on the determined range information in the at least one Doppler bin over the period of time are estimated.
Example 11, includes the method of Example 10, further including converting the at least one radar return signal from an analog signal to a digital signal.
Example 12 includes the method of any of the Examples 10-11, wherein the at least one return radar signal is one of a pulsed radar signal and a modulated continuous wave radar signal.
Example 13 includes the method of any of the Examples 10-12, further including, storing range and Doppler information in the range and Doppler bins in a range-Doppler array.
Example 14 includes the method of any of the Examples 10-13, further including determining the closest range with a sufficiently detectable signal within at least one Doppler bin over a period of time.
Example 15 includes the method of any of the Examples 10-14, further including determining only the closest range to the sea surface in a zero-Doppler bin.
Example 16 is a radar altimeter sea state estimation system. The radar altimeter sea state estimation system includes a transmitter, a receiver, at least one antenna, filtering and gating circuit, a Fast Fourier Transform (FFT), at least one memory and a controller. The transmitter is configured to transmit at least one radar signal. The receiver is configured to receive a return of the at least one radar signal. The at least one antenna is in communication with at least one of the transmitter and the receiver. The filtering and gating circuit is coupled to receive the return of the at least one radar signal and form a plurality of range bins. The FFT is configured to be applied across each range bin to produce a plurality of Doppler bins. The at least one memory is used to store the range bins and Doppler bins. The controller is in communication with the receiver, the filtering and gating circuit, the FFT, and the at least one memory. The controller is configured to determine range information in at least one Doppler bin over a period of time and estimate a primary peak period and a significant wave height based at least in part on the determined range information in the at least one Doppler bin over the period of time.
Example 17 includes the radar altimeter sea state estimation system of Example 16, further including an analog to digital converter coupled to digitize the return of the at least one radar signal.
Example 18 includes the radar altimeter sea state estimation system of any of the Examples 16-17, wherein the controller is further configured to store range and Doppler information in the range and Doppler bins in a range-Doppler array in the at least one memory.
Example 19 includes the radar altimeter sea state estimation system of any of the Examples 16-18, wherein the controller is further configured to determine the closest range with a sufficiently detectable signal within at least one Doppler bin over a period of time.
Example 20 includes the radar altimeter sea state estimation system of any of the Examples 16-19, wherein, the controller is further configured to determine the closest range to the sea surface in a zero-Doppler bin.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method of estimating the sea state beneath a platform using a radar altimeter (300, 400), the method comprising:
dividing a received wide angle radar beam into a plurality of Doppler bins (312, 404);
tracking ranges to a sea surface for at least one Doppler bin over time (316, 408); and
estimating wave spectrum information associated with the sea state based on at least one tracked range, the estimated wave spectrum information including at least one of a primary peak period estimation (320, 410) and a significant wave height estimation (324, 420).

2. The method of claim 1, wherein dividing the received wide angle radar beam into a plurality of Doppler bins further comprises:
applying pulse Doppler processing techniques to samples provided by the radar altimeter.

3. The method of claim 1, further comprising:
filtering and gating digital samples of the wide angle radar beam over pulse repetition intervals to produce a vector of range bins in each pulse repetition interval (402);
storing the produced range bin vectors over several pulse repletion intervals to form a range-time array;
applying Fast Fourier Transforms in each range bin across a time dimension of the rang-time array to produce Doppler bins in a range-Doppler array (404);
determining the a nearest range with a sufficiently detectable signal within each Doppler bin to establish a range-Doppler vector (406);
storing range values from one or more Doppler bins from the range-Doppler vector over several coherent processing intervals; and
performing a Fast Fourier Transform of the range values over several coherent processing intervals in at least one tracked Doppler bin to estimate the wave spectrum information (410).

4. The method of claim 3, wherein estimating the significant wave height further comprises:
computing a standard deviation of the range values in at least one Doppler bin over several coherent processing intervals (420).

5. The method of claim 4, wherein a significant wave height is four times the standard deviation of the sea surface elevation.

6. The method of claim 1, wherein tracking ranges to a sea surface for at least one Doppler bin over time further comprises:
tracking only the closest range to the sea surface in each of the at least one Doppler bin.

7. The method of claim 6, wherein tracking only the closest range to the sea surface in at least one Doppler bin further comprises:
tracking only the closest range to the sea surface in a zero-Doppler bin.

8. A radar altimeter sea state estimation system (200) comprising:
a transmitter (130) to transmit at least one radar signal;
a receiver (132) to receive a return of the at least one radar signal;
at least one antenna (134) in communication with at least one of the transmitter (130) and the receiver (132);
a filtering and gating circuit (211) coupled to receive the return of the at least one radar signal and form a plurality of range bins;
a Fast Fourier Transform (215) configured to be applied across each range bin to produce a plurality of Doppler bins;
at least one memory (202) to store the range bins and Doppler bins
a controller (201) in communication with the receiver (132), the filtering and gating circuit (211), the Fast Fourier Transform (215), and the at least one memory (202), the controller (201) configured to determine range information in at least one Doppler bin over a period of time and estimate a primary peak period and a significant wave height based at least in part on the determined range information in the at least one Doppler bin over the period of time.

9. The radar altimeter sea state estimation system (200) of claim 16, further comprising:
An analog to digital converter (210) coupled to digitize the return of the at least one radar signal.

10. The radar altimeter sea state estimate system (200) of claim 16, wherein the controller (201) is further configured to store range and Doppler information in the range and Doppler bins in a range-Doppler array in the at least one memory (202).
